# EUROPEAN PATENT APPLICATION

(11) **EP 4 155 423 A1**
(43) Date of publication of application: **29.03.2023**
(21) Application number: 21808063.8
(22) Date of filing: 26.03.2021
(51) Int. Cl.: C21D 8/12, C22C 38/00, C22C 38/60, H01F 1/147, C23C 22/00

(54) **GRAIN-ORIENTED ELECTROMAGNETIC STEEL SHEET AND METHOD FOR MANUFACTURING SAME**

(30) Priority: 19.05.2020 JP 2020087743
(71) Applicant: JFE Steel Corporation, Tokyo 100-0011 (JP)
(72) Inventor: INOUE, Hirotaka, Tokyo 100-0011 (JP); OMURA, Takeshi, Tokyo 100-0011 (JP); ICHIHARA, Yoshihisa, Tokyo 100-0011 (JP); TAKAJO, Shigehiro, Tokyo 100-0011 (JP); SENDA, Kunihiro, Tokyo 100-0011 (JP)
(74) Representative: Grünecker Patent- und Rechtsanwälte PartG mbB
(86) International application number: PCT/JP2021/013101
(87) International publication number: WO 2021/235094

(57) **Abstract**

Provided is a grain-oriented electrical steel sheet which has been subjected to heat-resistant magnetic domain refining treatment and can effectively suppress carburizing and nitriding during stress relief annealing. The grain-oriented electrical steel sheet has a plurality of grooves on one side that extend linearly across the rolling direction and are lined up at intervals in the rolling direction, and has at least a forsterite film on a surface of the steel sheet, where an average thickness of the forsterite film formed on the floor of the grooves is 0.45 µm or more, and a standard deviation σ of the thickness is 0.34 µm or less.

## Description

### TECHNICAL FIELD

This disclosure relates to a grain-oriented electrical steel sheet suitable for iron core materials of transformers or the like, and to a method of manufacturing the same.

### BACKGROUND

Grain-oriented electrical steel sheets have crystal microstructures in which the <001> orientation, which is an easy magnetization axis of iron, is highly accorded with the rolling direction of the steel sheets, and they are particularly used as iron core materials of power transformers.

Transformers are broadly classified into laminate iron core transformers and coil iron core transformers based on their iron core structure. A laminate iron core transformer has an iron core formed by laminating steel sheets cut to a predetermined shape. On the other hand, a coil iron core transformer has an iron core formed by coiling steel sheets. A transformer iron core is required to have various properties, among which reduced and low iron loss is particularly important.

There has been a strong demand for development of materials having such effects of reducing iron loss.

From this point of view, low iron loss is also an important property required for a grain-oriented electrical steel sheet, which is a material of iron core. Magnetic domain refining technology is one of the technologies for this purpose.

Magnetic domain refining technology is a technology of introducing non-uniformity into a surface of a steel sheet by physical means to subdivide the width of magnetic domains to reduce iron loss.

For example, JP S63-42332 A (PTL 1) describes a technology of refining magnetic domains by forming linear grooves in a direction that intersects the rolling direction of a grain-oriented electrical steel sheet. In addition, JP S63-44804 B (PTL 2) describes a technology of refining magnetic domains by forming grooves having a depth of more than 5 µm on a steel substrate portion of a steel sheet after final annealing at a load of 882 MPa to 2156 MPa (90 kgf/mm² to 220 kgf/mm²), and then subjecting the steel sheet to heat treatment at a temperature of 750 °C or higher.

These technologies are so-called heat-resistant magnetic domain refining technologies, the effects of which do not disappear even if stress relief annealing is performed after a transformer is assembled.

### CITATION LIST

### Patent Literature

PTL 1: JP S63-42332 A
PTL 2: JP S63-44804 B
PTL 3: JP 5771620 B

### SUMMARY

### (Technical Problem)

In the production of a coil iron core transformer, a steel sheet is bent when the steel sheet is coiled to form an iron core. The bending process introduces strain in the steel sheet, which deteriorates the magnetic properties in that area and increases iron loss in the iron core. Therefore, after forming the iron core, stress relief annealing is usually performed to eliminate the strain introduced in the bent area.

The stress relief annealing is performed at high temperatures of about 800 °C in an atmosphere of inert gas (such as argon and nitrogen) or exothermic converted gas (such as DX gas). In annealing with nitriding or carburizing gases such as nitrogen or DX gas, nitriding or carburizing may occur during the annealing.

Nitrogen and carbon that have entered the steel may combine with other elements in the steel during cooling after the annealing or by subsequent aging, precipitate in the steel as nitrides or carbides, and deteriorate the magnetic properties. Normally, the annealing temperature or the annealing atmosphere is controlled to prevent such deterioration of magnetic properties. However, because of the cost advantage and utility of the gases, there are cases where stress relief annealing is performed even though nitriding or carburizing may occur.

On the other hand, the surface of a grain-oriented electrical steel sheet, which is an iron core material, is coated to ensure insulation, rust resistance, and other properties. Such coating generally contains a forsterite film and a tension coating, and it contributes to suppressing the above-described nitriding and carburizing during stress relief annealing.

However, physical non-uniformities such as grooves and scribing are introduced in a steel sheet which has been subjected the above-described heat-resistant magnetic domain refining, which inevitably result in insufficient film formation or non-uniform film formation in the non-uniform areas.

As a result, a material for coil iron core transformer that has been subjected to heat-resistant magnetic domain refining has superior iron loss properties compared to a steel sheet having no grooves, scribing, or other physical non-uniformities, but it has a problem that nitriding and carburizing are likely to occur during stress relief annealing.

It could thus be helpful to provide a grain-oriented electrical steel sheet that can effectively suppress carburizing and nitriding during stress relief annealing as well as a method of manufacturing the same.

### (Solution to Problem)

To suppress carburizing and nitriding during stress relief annealing in a material that has been subjected to heat-resistant magnetic domain refining treatment, it is most important to form a dense and uniform forsterite film layer even in the lower part (floor) of linear grooves formed on the steel sheet.

Surface reactions are generally the starting point of carburizing and nitriding. In such surface reactions, carburizing and nitriding gases (e.g., carbon dioxide gas, nitrogen gas, and ammonia gas) decompose on the steel sheet surface to form carbon and nitrogen radicals. The carbon and nitrogen radicals then penetrate into the steel sheet, diffuse, and combine with other elements in the steel (such as silicon) during cooling to form carbides and nitrides. Such carbides and nitrides deteriorate the magnetic properties of the steel sheet, so that the magnetic properties of the steel sheet after the subsequent stress relief annealing are deteriorated.

To prevent carburizing and nitriding, it is important to inhibit the formation of radicals on the steel sheet surface, as well as their penetration and diffusion, respectively.

First, to prevent the formation of radicals on the steel sheet surface, it is essential that the steel substrate be covered by a dense film without being exposed to gases to be used in stress relief annealing.

Next, the denseness of a forsterite film layer is important to prevent the subsequent penetration of carbon and nitrogen radicals into the steel sheet, because a densely formed forsterite film layer inhibits their penetration and prevents the formation of carbides and nitrides.

For a steel sheet material that has been subjected to heat-resistant magnetic domain refining treatment, grooves may not be covered with a dense film depending on the formation method of the grooves.

For example, JP 5771620 B (PTL 3) describes a method of forming grooves on a steel sheet after secondary recrystallization annealing (final annealing) by irradiating the steel sheet with high-output laser beams. In this method, a forsterite film is destroyed when forming grooves with the high-output lasers.

Further, in the method disclosed in PTL 2 in which a recessed part is formed in a steel sheet after final annealing or after forming an insulating coating with a gear-shaped roller, and fine grains are formed in the recessed part during stress relief annealing, a forsterite film layer is also destroyed when the gear-shaped roller is pressed against the steel sheet.

On the other hand, in the method described in PTL 1 in which grooves are formed on the steel sheet surface by etching treatment after cold rolling and before final annealing, a forsterite film layer is also formed on the floor of the grooves, which is suitable in terms of suppressing carburizing and nitriding during stress relief annealing.

However, even in such a method in which grooves are formed on the steel sheet surface by etching treatment after cold rolling and before final annealing, there are variations in the way the forsterite is formed on the floor of the grooves.

As a result of diligent studies, we found that carburizing and nitriding during stress relief annealing can be best suppressed by minimizing the variation in the way the forsterite is formed.

In other words, we have found that, by manufacturing a grain-oriented electrical steel sheet that satisfies the following conditions, it is possible to effectively suppress carburizing and nitriding during stress relief annealing, which is performed during a subsequent process of iron core processing.

The present disclosure was completed based on the above findings, and the primary features thereof are as follows.
1. A grain-oriented electrical steel sheet comprising a plurality of grooves on one side of the steel sheet that extend linearly across a rolling direction and are lined up at intervals in the rolling direction, and having at least a forsterite film on a surface of the steel sheet, wherein
   an average thickness of the forsterite film formed on floor of the grooves is 0.45 µm or more, and a standard deviation σ of the thickness is 0.34 µm or less.
2. A method of manufacturing a grain-oriented electrical steel sheet, comprising a series of processes of subjecting a slab for grain-oriented electrical steel sheet to hot rolling to obtain a hot-rolled sheet, then subjecting the hot-rolled sheet to cold rolling once or two or more times with intermediate annealing performed therebetween to obtain a steel sheet with a final thickness, then subjecting the steel sheet to decarburization annealing, then subjecting the steel sheet to final annealing after applying an annealing separator to a surface of the steel sheet, and then subjecting the steel sheet to final annealing, wherein
   after the cold rolling and before the applying of an annealing separator, resist ink is applied to one side of the steel sheet, a laser is repeatedly scanned in a linear fashion across a rolling direction of the steel sheet on the applied surface at intervals in the rolling direction, the resist ink is removed from areas irradiated by the laser, and then electrolytic etching is applied on the removed areas to form a plurality of grooves that extend linearly across the rolling direction of the steel sheet and are lined up at intervals in the rolling direction, and
   the scanning of the laser is performed with an irradiation energy of the laser being less than 30 J/m and a temperature of the steel sheet being 40 °C or higher and lower than 200 °C.

### (Advantageous Effect)

According to the present disclosure, it is possible to provide a grain-oriented electrical steel sheet which has been subjected to heat-resistant magnetic domain refining treatment and can effectively suppress carburizing and nitriding during stress relief annealing, as well as a method of manufacturing the same.

### BRIEF DESCRIPTION OF THE DRAWINGS

In the accompanying drawings:
FIG. 1 illustrates the location where a samples for cross-sectional observation is collected;
FIG. 2 illustrates the definition of the floor of a groove;
FIG. 3 illustrates the relationship between the average forsterite film thickness on the floor of grooves and the increase or decrease in W_{17/50} under Condition 1 of Experiment 1;
FIG. 4 illustrates the relationship between the average forsterite film thickness on the floor of grooves and the increase or decrease in carbon under Condition 1 of Experiment 1;
FIG. 5 illustrates the relationship between the average forsterite film thickness on the floor of grooves and the increase or decrease in W_{17/50} under Condition 2 of Experiment 1;
FIG. 6 illustrates the relationship between the average forsterite film thickness on the floor of grooves and the increase or decrease in carbon under Condition 2 of Experiment 1; and
FIG. 7 illustrates the relationship between the irradiation energy and steel sheet temperature during resist peeling, and the average value and standard deviation of the thickness of the resulting forsterite film formed on the floor of grooves of the steel sheet.

### DETAILED DESCRIPTION

The following describes embodiments of the present disclosure in detail.

A grain-oriented electrical steel sheet of the present disclosure has a plurality of grooves on one side of the steel sheet that extend linearly across a rolling direction and are lined up at intervals in the rolling direction, and it has at least a forsterite film on a surface of the steel sheet. The grain-oriented electrical steel sheet preferably further has a tension coating on the forsterite film. Further, for the grain-oriented electrical steel sheet of the present disclosure, it is essential an average thickness of the forsterite film formed on the floor of the linear grooves be 0.45 µm or more, and a standard deviation σ of the thickness of the forsterite film be 0.34 µm or less.

The grain-oriented electrical steel sheet of the present disclosure can be suitably obtained with the method of manufacturing a grain-oriented electrical steel sheet of the present disclosure, which will be described later.

The following describes the results of experiments in which we studied the conditions for forming a forsterite film on the floor of the grooves.

### <Experiment 1>

A steel slab (slab for grain-oriented electrical steel sheet) was manufactured by continuous casting, where the steel slab had a chemical composition containing C: 0.07 mass%, Si: 3.4 mass%, Mn: 0.1 mass%, Ni: 0.2 mass%, Al: 240 mass ppm, S: 20 mass ppm, N: 90 mass ppm, and Se: 180 mass ppm, with the balance being Fe and inevitable impurities. The slab was heated to 1430 °C and then subjected to hot rolling to obtain a hot-rolled sheet with a thickness of 2.2 mm. The hot-rolled sheet was subjected to hot-rolled sheet annealing at 1100 °C for 20 seconds. Next, the hot-rolled sheet after hot-rolled sheet annealing was subjected to cold rolling to obtain an intermediate thickness of 0.40 mm, and then to intermediate annealing under the conditions of oxidation degree P(H₂O)/P(H₂) = 0.40, temperature: 1000 °C, and time: 70 seconds. Further, after removing subscales from the surface of the cold-rolled sheet after intermediate annealing by pickling with hydrochloric acid, the sheet was subjected to cold rolling again to obtain a cold-rolled sheet (or simply "steel sheet") with a final thickness of 0.23 mm.

One side of the steel sheet was masked by printing and applying resist ink using a groove roller with grooves with a width of 100 mm to 250 mm at a circumferential pitch of 3 mm, and electrolytic etching was performed to form grooves with a depth of 25 µm in areas that were not printed with resist (Resist Condition 1). Another condition is that, after resist ink was applied to one side of the steel sheet, a laser was repeatedly scanned in a linear fashion in a direction orthogonal to the rolling direction (width direction) and at intervals of 3 mm in the rolling direction so that the resist ink was peeled off and removed at intervals of 3 mm in the rolling direction. Subsequently, electrolytic etching was performed in the same manner as in Condition 1 to form grooves with a depth of 25 µm (Resist Condition 2). After electrolytic etching, the resist ink remaining on the steel sheet under was removed under both conditions. The laser irradiation was performed with a galvano scanner method by a single mode fiber laser with a peeling width of 100 mm to 250 mm, and the irradiation energy was set to 25 J/m so as to continuously peel off the resist ink from one end to the other end in the width direction of the steel sheet. The temperature of the steel sheet when irradiated with the laser was changed in various ways. In the present specification, the temperature of the steel sheet is defined as the temperature at the surface of the steel sheet on the laser irradiated side of the steel sheet, which can be measured by a non-contact infrared radiation thermometer, for example.

Next, the steel sheet was subjected to decarburization annealing where it was retained at an oxidation degree P(H₂O)/P(H₂) = 0.44 to 0.60 and a soaking temperature of 820 °C for 300 seconds. Next, an annealing separator composed mainly of MgO was applied to the surface of the steel sheet, and the steel sheet was subjected to final annealing for the purposes of secondary recrystallization, formation of a forsterite film and purification under the conditions of 1160 °C and 10 hours. Then, tension coating was performed in which an insulating coating made of 60 mass% colloidal silica and aluminum phosphate was applied and baked at 850 °C. This tension coating application process also serves as flattening annealing.

The thickness of the forsterite film formed on the floor of the grooves of a test piece obtained after the tension coating application process was investigated with the method described below, and the average value and standard deviation were calculated. A sample where an average thickness of the forsterite film on the floor of the grooves was 0.31 µm to 0.82 µm and the standard deviation was 0.22 µm to 0.74 µm was obtained under Resist Condition 1, and a sample where an average thickness of the forsterite film on the floor of the grooves was 0.32 µm to 0.91 µm and the standard deviation was 0.05 µm to 0.43 µm was obtained under Resist Condition 2, respectively.

### [[Measurement of forsterite film thickness at floor of groove]]

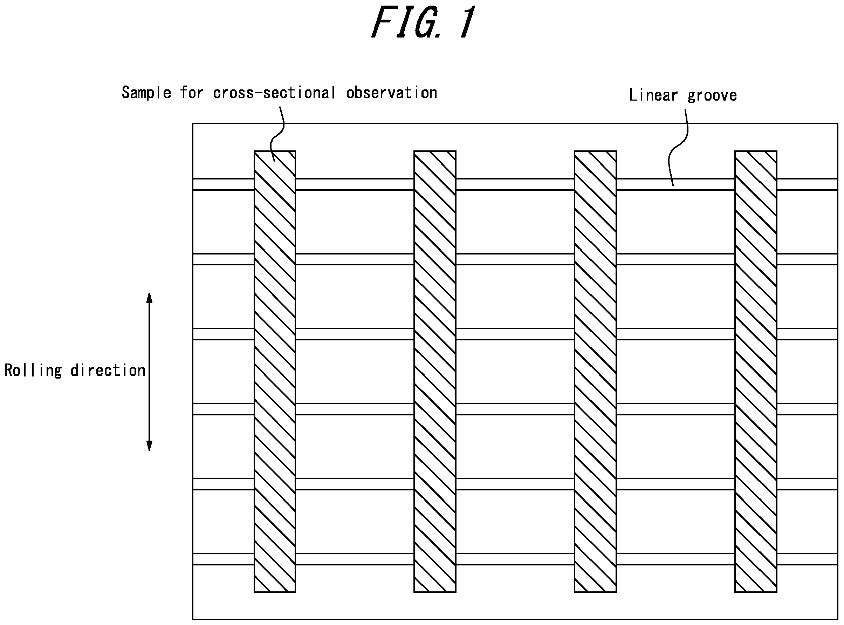

As illustrated in FIG. 1, a sample for cross-sectional observation is collected in the rolling direction to include six linear grooves. Further, the cross section of the sample is observed by SEM to measure the thickness of the forsterite film on the floor of the grooves.

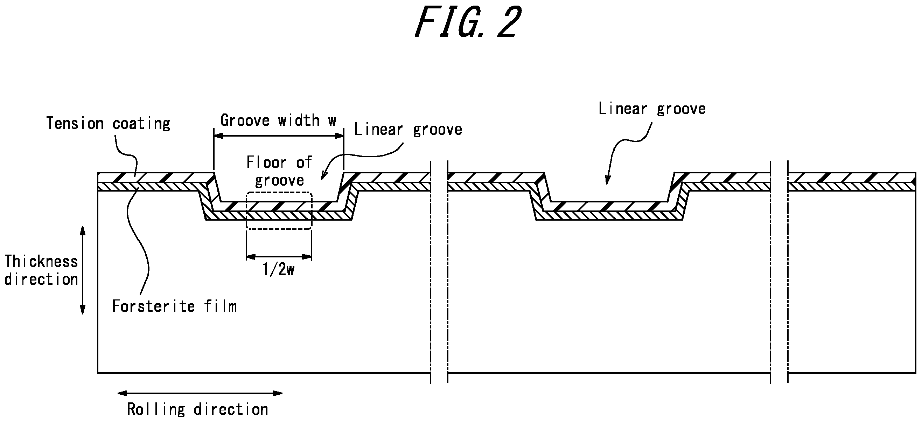

In the present specification, the floor of a groove is defined as an area centered at the center of the groove and having a width half the groove width w, as illustrated in FIG. 2. The groove width w means the length of an area where resist ink is not applied during electrolytic etching (non-applied area) along a direction orthogonal to a direction in which the linear groove extends (the rolling direction in FIG. 2). The center of the groove means a location at the center of the groove width w in the rolling direction.

The thickness of the forsterite film is measured for any five linear grooves in one sample for cross-sectional observation, the results are averaged, and the average value is defined as the thickness of the forsterite film at the location. In one steel sheet sample (width direction: 1000 mm × rolling direction: 500 mm), samples for cross-sectional observation are collected at 20 locations, the forsterite film thickness on the floor of the grooves of each sample is calculated, and their average value and standard deviation are determined.

The forsterite film area can be determined based on the contrast of SEM observation images, but in some cases, it is easier to determine based on the contrast of reflected electron images (BSE). When it is difficult to determine based on the contrast of images, the presence or absence of Mg by elemental analysis using EDX may be appropriately used to determine if it is a forsterite film area. In the present specification, it was determined based on the contrast of images in BSE images.

### [[Magnetic property measurement]]

The test piece after tension coating application process was sheared to a size of 30 mm × 280 mm and then subjected to stress relief annealing under conditions of an argon atmosphere, 800 °C and 3 hours (to eliminate the effects of shearing) to obtain a sample, and magnetic property measurement was performed by the Epstein test method. To further investigate the effect of stress relief annealing in a carburizing atmosphere, the sample was again annealed at 870 °C for 2 hours in mixed gases of CO: 0.5 vol%, CO₂: 13 vol%, H₂O: 2.5 vol%, H₂: 1 vol%, and N₂ (dew point: 20 °C) as the residual gas, and magnetic property measurement was performed with the Epstein test method.

The Epstein test results of the sample before and after the stress relief annealing in the carburizing atmosphere mixed gases were compared to determine the increase or decrease in W_{17/50} (iron loss when excited at 50 Hz to 1.7 T). Further, the carbon content was chemically analyzed before and after the stress relief annealing in the mixed gases. The results of chemical analysis before and after the annealing in the carburizing atmosphere mixed gases were compared to determine the increase or decrease in carbon.

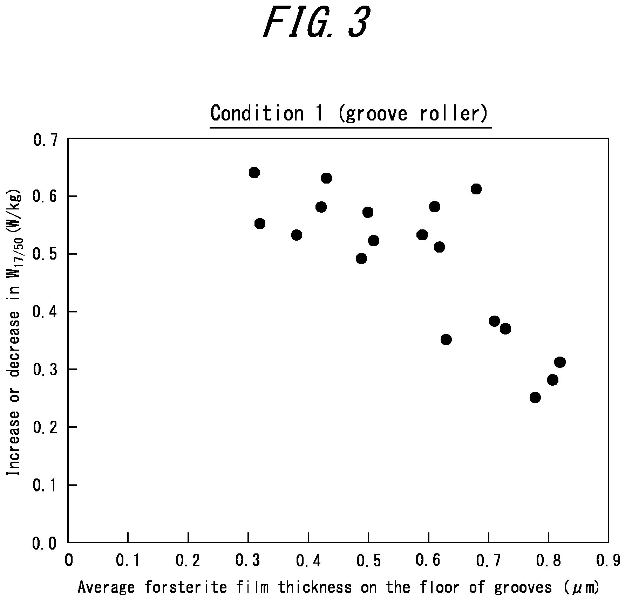

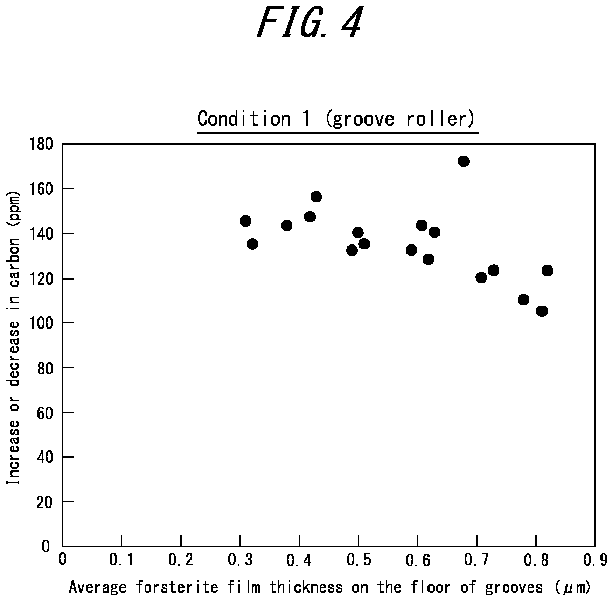

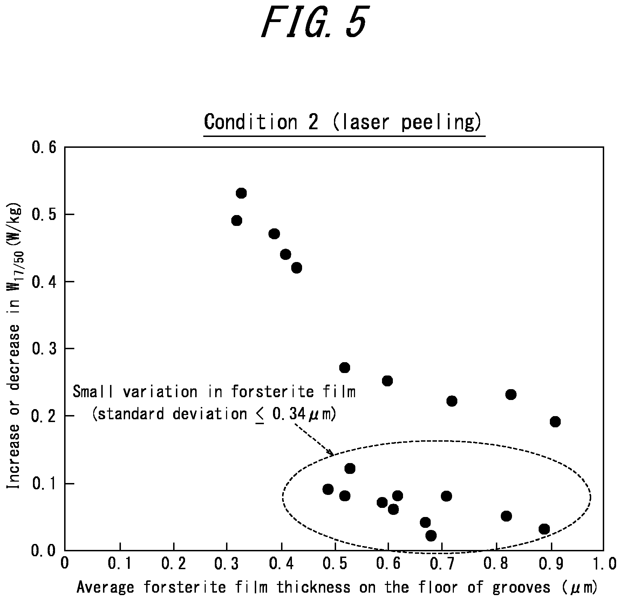

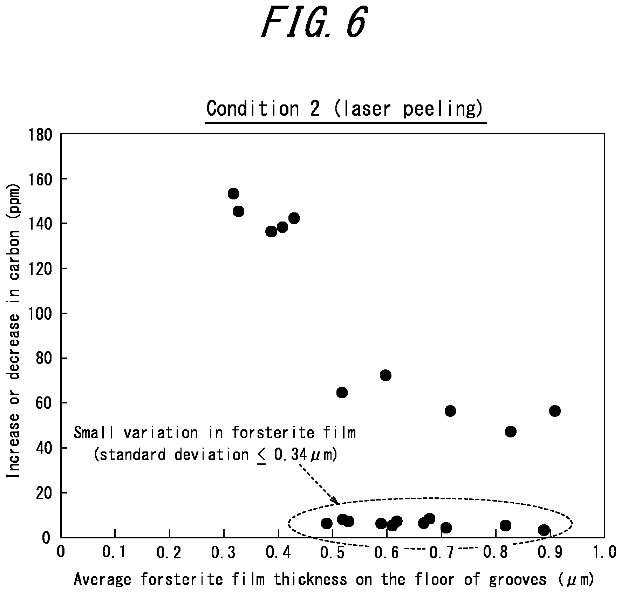

The average value and standard deviation of the thickness of the forsterite film formed on the floor of the grooves, and the increase or decrease in W_{17/50} and the increase or decrease in carbon (carburizing quantity) before and after the stress relief annealing in the carburizing atmosphere mixed gases are listed in Table 1 and FIGS. 3 and 4 (Resist Condition 1) and FIGS. 5 and 6 (Resist Condition 2), respectively.

**Table 1**

| Experiment 1 Test No. | Resist Condition | | Forsterite film thickness on the floor of grooves | | Before and after stress relief annealing in carburizing atmosphere mixed gases | |
|---|---|---|---|---|---|---|
| | | | Average (µm) | Standard deviation (µm) | Increase or decrease in W_{17/50} (W/kg) | Increase or decrease in carbon (ppm) |
| 1 | Condition 1 (groove roller) | | 0.32 | 0.23 | 0.55 | 135 |
| 2 | Condition 1 (groove roller) | | 0.31 | 0.30 | 0.64 | 145 |
| 3 | Condition 1 (groove roller) | | 0.38 | 0.22 | 0.53 | 143 |
| 4 | Condition 1 (groove roller) | | 0.42 | 0.36 | 0.58 | 147 |
| 5 | Condition 1 (groove roller) | | 0.43 | 0.41 | 0.63 | 156 |
| 6 | Condition 1 (groove roller) | | 0.49 | 0.39 | 0.49 | 132 |
| 7 | Condition 1 (groove roller) | | 0.51 | 0.47 | 0.52 | 135 |
| 8 | Condition 1 (groove roller) | | 0.50 | 0.51 | 0.57 | 140 |
| 9 | Condition 1 (groove roller) | | 0.61 | 0.45 | 0.58 | 143 |
| 10 | Condition 1 (groove roller) | | 0.59 | 0.49 | 0.53 | 132 |
| 11 | Condition 1 (groove roller) | | 0.62 | 0.44 | 0.51 | 128 |
| 12 | Condition 1 (groove roller) | | 0.63 | 0.53 | 0.35 | 140 |
| 13 | Condition 1 (groove roller) | | 0.68 | 0.56 | 0.61 | 172 |
| 14 | Condition 1 (groove roller) | | 0.71 | 0.47 | 0.38 | 120 |
| 15 | Condition 1 (groove roller) | | 0.73 | 0.53 | 0.37 | 123 |
| 16 | Condition 1 (groove roller) | | 0.78 | 0.56 | 0.25 | 110 |
| 17 | Condition 1 (groove roller) | | 0.81 | 0.63 | 0.28 | 105 |
| 18 | Condition 1 (groove roller) | | 0.82 | 0.74 | 0.31 | 123 |
| 19 | Condition 2 (laser peeling) | 40 | 0.32 | 0.08 | 0.49 | 153 |
| 20 | Condition 2 (laser peeling) | 35 | 0.33 | 0.17 | 0.53 | 145 |
| 21 | Condition 2 (laser peeling) | 30 | 0.39 | 0.11 | 0.47 | 136 |
| 22 | Condition 2 (laser peeling) | 25 | 0.41 | 0.22 | 0.44 | 138 |
| 23 | Condition 2 (laser peeling) | 15 | 0.43 | 0.29 | 0.42 | 142 |
| 24 | Condition 2 (laser peeling) | 60 | 0.52 | 0.09 | 0.08 | 8 |
| 25 | Condition 2 (laser peeling) | 70 | 0.49 | 0.17 | 0.09 | 6 |
| 26 | Condition 2 (laser peeling) | 100 | 0.53 | 0.27 | 0.12 | 7 |
| 27 | Condition 2 (laser peeling) | 220 | 0.52 | 0.39 | 0.27 | 64 |
| 28 | Condition 2 (laser peeling) | 80 | 0.61 | 0.10 | 0.06 | 5 |
| 29 | Condition 2 (laser peeling) | 90 | 0.59 | 0.21 | 0.07 | 6 |
| 30 | Condition 2 (laser peeling) | 120 | 0.62 | 0.28 | 0.08 | 7 |
| 31 | Condition 2 (laser peeling) | 250 | 0.60 | 0.43 | 0.25 | 72 |
| 32 | Condition 2 (laser peeling) | 130 | 0.68 | 0.05 | 0.02 | 8 |
| 33 | Condition 2 (laser peeling) | 140 | 0.67 | 0.17 | 0.04 | 6 |
| 34 | Condition 2 (laser peeling) | 150 | 0.71 | 0.28 | 0.08 | 4 |
| 35 | Condition 2 (laser peeling) | 270 | 0.72 | 0.41 | 0.22 | 56 |
| 36 | Condition 2 (laser peeling) | 160 | 0.82 | 0.26 | 0.05 | 5 |
| 37 | Condition 2 (laser peeling) | 240 | 0.83 | 0.42 | 0.23 | 47 |
| 38 | Condition 2 (laser peeling) | 180 | 0.89 | 0.31 | 0.03 | 3 |
| 39 | Condition 2 (laser peeling) | 230 | 0.91 | 0.38 | 0.19 | 56 |

It was found that, when the average thickness of the forsterite film formed on the floor of the grooves is 0.45 µm or more, there are conditions under which the increase in iron loss can be suppressed to a low level and the carburizing quantity can be suppressed to a low level for both the increase and decrease in iron loss W_{17/50} and the increase and decrease in carbon (carburizing quantity). Further detailed investigation revealed that, in a steel sheet with an average forsterite film thickness of 0.45 µm or more, the condition under which the increase in iron loss and the increase in carburizing quantity can be significantly suppressed is that the standard deviation of the forsterite film thickness is 0.34 µm or less. It is considered that, when the forsterite film thickness is formed with such a low standard deviation, high denseness of the forsterite film can be obtained.

Further, a forsterite film thickness in the above specified range was achieved only under Resist Condition 2, where resist peeling by laser was performed.

Next, we experimentally searched for conditions under which steel sheets with a forsterite film where the average thickness is 0.45 µm or more and the standard deviation of the thickness is 0.34 µm or less formed in the floor of the grooves can be stably obtained, and we found that it is necessary to satisfy the following three conditions.
(1) After cold rolling and before applying an annealing separator (i.e., before final annealing), resist ink is applied to one side of the steel sheet.
(2) A laser is repeatedly scanned in a linear fashion across the rolling direction of the steel sheet on the applied surface of the steel sheet, which has been applied with the resist ink, at intervals in the rolling direction, the resist ink is removed from areas irradiated by the laser, and then electrolytic etching is performed on the removed areas to form a plurality of grooves that extend linearly across the rolling direction of the steel sheet and are lined up at intervals in the rolling direction.
(3) The scanning of the laser is performed under conditions where an irradiation energy of the laser is less than 30 J/m, and a temperature of the steel sheet is 40 °C or higher and lower than 200 °C.

The condition (1) means that, to form a good forsterite film on the floor of the grooves, the grooves need to be formed at least before the final annealing in which the forsterite film is formed (more specifically, before an annealing separator is applied).

Regarding the condition (2), when resist ink is printed as in conventional cases, resist ink from an adjacent printed area inevitably drips in a non-printed area (an area where grooves are formed by etching), resulting in non-uniform width of the non-printed area and non-uniform groove width after formation. When such non-uniform groove width occurs, there will be a variation in the digging of grooves during etching according to the local variation in groove width. As a result, the unevenness on the floor of the grooves becomes severe, and the thickness of the forsterite film formed on the floor varies. Therefore, the object of the present disclosure cannot be achieved in this case.

On the other hand, with the method of peeling off resist ink by laser irradiation as in the present disclosure, the width of the peeled part of resist ink is uniform, that is, within about ±10 µm, so that the digging of grooves is uniform during etching. As a result, it is considered that the formation of grooves using laser scanning under predetermined conditions is one factor that allows the thickness of a forsterite film formed thereon to be uniform and satisfies the requirement for the standard deviation of the forsterite film thickness.

The condition (3) is explained below with reference to experiments clarifying that the condition is suitable for the present disclosure.

### <Experiment 2>

A steel slab (slab for grain-oriented electrical steel sheet) was manufactured by continuous casting, where the steel slab had a chemical composition containing C: 0.07 mass%, Si: 3.4 mass%, Mn: 0.1 mass%, Ni: 0.2 mass%, Al: 240 mass ppm, S: 20 mass ppm, N: 90 mass ppm, and Se: 180 mass ppm, with the balance being inevitable impurities. The slab was heated to 1430 °C and then subjected to hot rolling to obtain a hot-rolled sheet with a thickness of 2.2 mm. The hot-rolled sheet was subjected to hot-rolled sheet annealing at 1100 °C for 20 seconds. Next, the hot-rolled sheet after hot-rolled sheet annealing was subjected to cold rolling to obtain an intermediate thickness of 0.40 mm, and to intermediate annealing under the conditions of oxidation degree P(H₂O)/P(H₂) = 0.40, temperature: 1000 °C, and time: 70 seconds. Further, after removing subscales from the surface of the cold-rolled sheet after intermediate annealing by pickling with hydrochloric acid, the sheet was subjected to cold rolling again to obtain a steel sheet with a final thickness of 0.23 mm.

After resist ink was applied to one side of the steel sheet, a laser was repeatedly scanned in a linear fashion in a direction orthogonal to the rolling direction and at intervals of 3 mm in the rolling direction so that the resist ink was peeled off and removed at intervals of 3 mm in the rolling direction. The laser irradiation was performed with a galvano scanner method by a single mode fiber laser with a peeling width of 100 mm to 250 mm, and the irradiation energy was set to 15 J/m to 50 J/m to peel off the resist ink continuously and completely from one end to the other end in the width direction of the steel sheet. At that time, the laser irradiation was performed with the temperature of the steel sheet changed between 15 °C to 250 °C. Next, electrolytic etching was performed to form grooves with a depth of 25 µm. After the electrolytic etching, the resist ink remaining on the steel sheet was removed.

Next, the steel sheet was subjected to decarburization annealing where it was retained at an oxidation degree P(H₂O)/P(H₂) = 0.44 to 0.60 and a soaking temperature of 820 °C for 300 seconds. Next, an annealing separator composed mainly of MgO was applied to the surface of the steel sheet, and the steel sheet was subjected to final annealing for the purposes of secondary recrystallization, formation of a forsterite film and purification under the conditions of 1160 °C and 10 hours. Then, tension coating was performed in which an insulating coating made of 60 mass% colloidal silica and aluminum phosphate was applied and baked at 850 °C. This tension coating application process also serves as flattening annealing.

Next, the thickness of the forsterite film formed on the floor of the grooves was investigated with the method described above, and the average value and standard deviation were calculated.

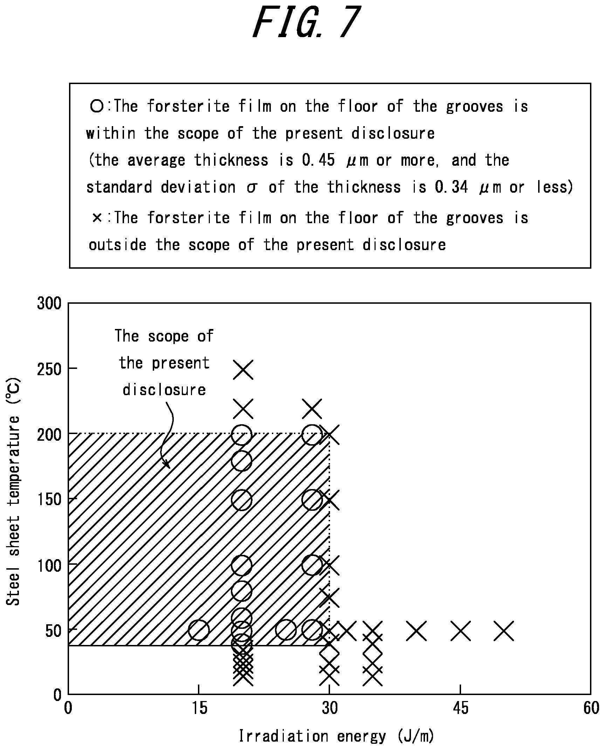

The relationship between the irradiation energy and steel sheet temperature during resist peeling, and the average value and standard deviation of the thickness of the resulting forsterite film formed on the floor of the grooves of the steel sheet are summarized in Table 2 and FIG. 7. As a result, it was found that, when laser scanning is performed under conditions where the laser irradiation energy is less than 30 J/m and the steel sheet temperature is 40 °C or higher and lower than 200 °C, the average thickness of the forsterite film formed on the floor of the grooves is 0.45 µm or more, and the standard deviation σ of the thickness is 0.34 µm or less.

In FIG. 7, the lower limit of the steel sheet temperature (40 °C or higher) is indicated by solid lines, and the upper limit of the steel sheet temperature (lower than 200 °C) and the upper limit of the irradiation energy (less than 30 J/m) are indicated by dotted lines.

**Table 2**

| Experiment 2 Test No. | Laser scanning conditions | | Forsterite film thickness on the floor of grooves | | Remarks |
|---|---|---|---|---|---|
| | Irradiation energy (J/m) | Steel sheet temperature (°C) | Average (µm) | Standard deviation (µm) | |
| 1 | 15 | 50 | 0.68 | 0.05 | Within the scope |
| 2 | 20 | 50 | 0.64 | 0.04 | Within the scope |
| 3 | 25 | 50 | 0.72 | 0.03 | Within the scope |
| 4 | 28 | 50 | 0.71 | 0.12 | Within the scope |
| 5 | 30 | 50 | 0.44 | 0.33 | Outside the scope |
| 6 | 32 | 50 | 0.49 | 0.40 | Outside the scope |
| 7 | 35 | 50 | 0.53 | 0.42 | Outside the scope |
| 8 | 40 | 50 | 0.47 | 0.37 | Outside the scope |
| 9 | 45 | 50 | 0.41 | 0.32 | Outside the scope |
| 10 | 50 | 50 | 0.25 | 0.18 | Outside the scope |
| 11 | 20 | 15 | 0.65 | 0.39 | Outside the scope |
| 12 | 20 | 20 | 0.63 | 0.36 | Outside the scope |
| 13 | 20 | 25 | 0.64 | 0.37 | Outside the scope |
| 14 | 20 | 30 | 0.66 | 0.35 | Outside the scope |
| 15 | 20 | 35 | 0.68 | 0.36 | Outside the scope |
| 16 | 20 | 40 | 0.67 | 0.21 | Within the scope |
| 17 | 20 | 60 | 0.68 | 0.05 | Within the scope |
| 18 | 20 | 80 | 0.69 | 0.06 | Within the scope |
| 19 | 20 | 100 | 0.63 | 0.07 | Within the scope |
| 20 | 20 | 150 | 0.62 | 0.05 | Within the scope |
| 21 | 20 | 180 | 0.64 | 0.04 | Within the scope |
| 22 | 20 | 195 | 0.61 | 0.12 | Within the scope |
| 23 | 20 | 220 | 0.58 | 0.38 | Outside the scope |
| 24 | 20 | 250 | 0.59 | 0.42 | Outside the scope |
| 25 | 30 | 15 | 0.42 | 0.31 | Outside the scope |
| 26 | 30 | 25 | 0.41 | 0.28 | Outside the scope |
| 27 | 30 | 40 | 0.43 | 0.32 | Outside the scope |
| 28 | 35 | 15 | 0.53 | 0.42 | Outside the scope |
| 29 | 35 | 25 | 0.52 | 0.38 | Outside the scope |
| 30 | 35 | 40 | 0.55 | 0.40 | Outside the scope |
| 31 | 28 | 100 | 0.72 | 0.06 | Within the scope |
| 32 | 28 | 150 | 0.73 | 0.05 | Within the scope |
| 33 | 28 | 195 | 0.74 | 0.15 | Within the scope |
| 34 | 28 | 220 | 0.78 | 0.38 | Outside the scope |
| 35 | 30 | 75 | 0.45 | 0.37 | Outside the scope |
| 36 | 30 | 100 | 0.44 | 0.36 | Outside the scope |
| 37 | 30 | 150 | 0.46 | 0.38 | Outside the scope |
| 38 | 30 | 200 | 0.47 | 0.37 | Outside the scope |

One condition for satisfying that the average forsterite film thickness is 0.45 µm or more and the standard deviation σ of the thickness is 0.34 µm or less is that the laser irradiation energy is less than 30 J/m. We speculate the reason is as follows.

When the laser irradiation energy is high, strain remains in the steel sheet around the irradiated area (i.e., the area where grooves will be formed in the next process), resulting in variation in the digging of grooves during electrolytic etching, which is the next process. As a result, the thickness of the forsterite film formed on the floor of the grooves also varies due to the severe unevenness on the floor of the grooves.

Another condition for satisfying that the average forsterite film thickness is 0.45 µm or more and the standard deviation σ of the thickness is 0.34 µm or less is that laser scanning is performed under conditions of a steel sheet temperature of 40 °C or higher and lower than 200 °C. We speculate the reason is as follows.

When the steel sheet temperature is 40 °C or higher, the temperature distribution in the resist ink thin film becomes uniform when irradiated by the laser, resulting in uniform tenacity in the resist ink thin film. As a result, it is easier to peel off the ink uniformly during the laser irradiation, so that the shape of the grooves is stabilized, and variation in the thickness of the forsterite film formed on the floor of the grooves hardly occurs. On the other hand, when the steel sheet temperature is raised too high above 200 °C, the resist ink cannot be peeled off well by the laser irradiation because the resist ink thin film becomes too soft.

### [[Method of forming groove]]

As described above, the linear grooves in the present embodiment are formed by applying and adhering resist ink for etching to one side of a steel sheet and then performing electrolytic etching on non-applied areas. After that, the steel sheet is applied with an annealing separator and then subjected to final annealing. It is preferable to form linear grooves on the steel sheet after final cold rolling and before decarburization annealing. The non-applied area, which relates to the groove formation pattern, can be suitably formed with a method of applying resist ink to the entire surface on one side of the steel sheet and then peeling off and removing the ink by laser irradiation under the above conditions. The formation of a uniform and dense forsterite film on the floor of the grooves is important for suppressing nitriding and carburizing during stress relief annealing, so that it is essential to form the grooves before the application of annealing separator and final annealing in which the forsterite film is formed.

In the present specification, "across the rolling direction" is preferably within ± 30 degrees as a deviation with respect to a direction orthogonal to the rolling direction of the linear grooves. Further, in the present specification, a "linear" shape includes not only solid lines but also dotted lines, dashed lines, and other point line shapes.

A method of manufacturing the grain-oriented electrical steel sheet is not limited in terms of a method of forming grooves for the above-described magnetic domain refining and matters not directly related to the control of the thickness of the forsterite film formed on the floor of the grooves. However, the recommended chemical composition and manufacturing conditions of the steel sheet are exemplified below.

### [Chemical composition]

The chemical composition of a slab for grain-oriented electrical steel sheet of the present disclosure is a chemical composition capable of secondary recrystallization. In the case of using an inhibitor, for example, Al and N are added in appropriate amounts when using a AlN-based inhibitor, and Mn and Se and/or S are added in appropriate amounts when using a MnS/MnSe-based inhibitor. Both inhibitors may be used together. In this case, the optimal content of Al, N, S, and Se are, respectively, Al: 0.01 mass% to 0.065 mass%, N: 0.005 mass% to 0.012 mass%, S: 0.005 mass% to 0.03 mass%, and Se: 0.005 mass% to 0.03 mass%. Note that Al, N, S, and Se are purified in final annealing, and their contents are reduced to the level of inevitable impurities.

An inhibitorless grain-oriented electrical steel sheet in which the contents of Al, N, S, and Se are limited may be used in the present disclosure. In such a case, the contents of Al, N, S, and Se are preferably limited to, respectively, Al: less than 100 mass ppm, N: less than 50 mass ppm, S: less than 50 mass ppm, and Se: less than 50 mass ppm.

Other components of the chemical compositions are described below. C: 0.08 mass% or less

When the C content exceeds 0.08 mass%, it becomes difficult in the manufacturing processes to reduce the C content to 50 mass ppm or less at which point magnetic aging will not occur. Therefore, the C content is preferably 0.08 mass% or less. The lower limit is not particularly limited, as a material containing no C can still be secondary recrystallized. However, it is usually 0.001 mass% or more.

### Si: 2.0 mass% to 8.0 mass%

Si is an element effective in enhancing the electrical resistance of the steel and improving the iron loss. When the Si content is less than 2.0 mass%, the iron loss reduction effect is insufficient. On the other hand, when the content exceeds 8.0 mass%, the workability significantly deteriorates, and the magnetic flux density also tends to decrease. Therefore, the Si content is preferably 2.0 mass% or more. The Si content is preferably 8.0 mass% or less.

### Mn: 0.005 mass% to 1.0 mass%

Mn is an element necessary for improving the hot workability. However, when the content is less than 0.005 mass%, the addition effect is poor. On the other hand, when the content exceeds 1.0 mass%, the magnetic flux density of a product sheet tends to decrease. Therefore, the Mn content is preferably 0.005 mass% or more. The Mn content is preferably 1.0 mass% or less.

In addition to the suitable basic components described above, the following elements may be appropriately contained as suitable optionally added components to improve the magnetic properties.

At least one selected from the group consisting of Ni: 0.03 mass% to 1.50 mass%, Sn: 0.01 mass% to 1.50 mass%, Sb: 0.005 mass% to 1.50 mass%, Cu: 0.03 mass% to 3.0 mass%, P: 0.03 mass% to 0.50 mass%, Mo: 0.005 mass% to 0.10 mass%, and Cr: 0.03 mass% to 1.50 mass%.

Ni is useful for improving the hot-rolled sheet microstructure and improving the magnetic properties. However, when the content is less than 0.03 mass%, the effect of improving the magnetic properties is small. On the other hand, when the content exceeds 1.50 mass%, secondary recrystallization becomes unstable, and the magnetic properties tend to deteriorate. Therefore, the Ni content is preferably 0.03 mass% or more. The Ni content is preferably 1.50 mass% or less.

Further, Sn, Sb, Cu, P, Mo, and Cr are elements useful for improving the magnetic properties. However, when the content of each added element is below the lower limit described above, the effect of improving the magnetic properties is small. On the other hand, when the content of each added element exceeds the upper limit described above, the development of secondary recrystallized grains tends to be inhibited. Therefore, the content of each added element is preferably in the above-described range.

The balance other than the above-described elements is preferably inevitable impurities and Fe, which is a main component, that are incorporated during the manufacturing processes. In a product sheet (grain-oriented electrical steel sheet), the amount of the components other than C and inhibitor components contained in the steel material (slab for grain-oriented electrical steel sheet) is also contained in the product sheet as it is. On the other hand, C is reduced by decarburization annealing, and it is preferably reduced to 0.003 mass% or less in a product sheet to prevent an increase in iron loss due to magnetic aging. The inhibitor components are purified in the final annealing described below, and their contents are preferably reduced to the level of inevitable impurities in a product sheet.

The following describes a method of manufacturing a grain-oriented electrical steel sheet of the present disclosure.

### [Heating]

A slab suitably having the above chemical composition may be heated according to a conventional method prior to hot rolling. The heating temperature is preferably 1150 °C or higher. The heating temperature is preferably 1450 °C or lower.

### [Hot rolling]

Hot rolling is suitably performed after the heating to obtain a hot-rolled sheet. Alternatively, the slab may be directly subjected to hot rolling without heating, after casting. In the case of thin slab or thinner cast steel, hot rolling may be performed separately, or the preparation of thin slab or thinner cast steel may be combined with hot rolling.

In the case of performing hot rolling, it is preferable to set the rolling temperature in the rough rolling final pass to 900 °C or higher and the rolling temperature in the finish rolling final pass to 700 °C or higher.

### [Hot-rolled sheet annealing]

After this, the hot-rolled sheet is optionally subjected to hot-rolled sheet annealing. At this time, the hot-rolled sheet annealing temperature is preferably set in the range of 800 °C or higher and 1100 °C or lower to highly develop a Goss texture in a product sheet. When the hot-rolled sheet annealing temperature is lower than 800 °C, there remains a band texture resulting from hot rolling, which makes it difficult to obtain a primary recrystallization texture of uniformly-sized grains and tends to impede the growth of secondary recrystallization. On the other hand, when the hot-rolled sheet annealing temperature exceeds 1100 °C, the grain size after hot-rolled sheet annealing coarsens excessively, which makes it extremely difficult to obtain a primary recrystallization texture of uniformly-sized grains.

### [Cold rolling]

Next, the sheet is subjected to cold rolling once, or twice or more with intermediate annealing performed therebetween to obtain a steel sheet with a final thickness. The intermediate annealing temperature is preferably 800 °C or higher. The intermediate annealing temperature is preferably 1150 °C or lower. The intermediate annealing time is preferably about 10 seconds to 100 seconds.

### [Decarburization annealing]

Next, the steel sheet is subjected to decarburization annealing. The decarburization annealing is preferably performed under conditions of annealing temperature: 750 °C to 900 °C, oxidizing atmosphere P(H₂O)/P(H₂): 0.25 to 0.60, and annealing time: about 50 seconds to 300 seconds.

As described above, it is preferable to form grooves on the steel sheet after final cold rolling and before decarburization annealing.

### [Application of annealing separator]

Next, an annealing separator is applied to one side or both sides of the steel sheet. It is preferable to apply an annealing separator to both sides of the steel sheet. The main component of the annealing separator is MgO, and the amount applied is preferably about 8 g/m² to 15 g/m² on each side of the steel sheet to form a forsterite film with a predetermined thickness.

### [Final annealing]

Next, the steel sheet is subjected to final annealing for the purposes of secondary recrystallization and formation of a forsterite film.

From the viewpoint of forming a forsterite film with a predetermined thickness, the annealing temperature and annealing time are preferably 1100 °C or higher and 30 minutes or longer, respectively.

### [Tension coating and flattening annealing]

After the final annealing, correcting the shape by flattening annealing is effective in improving the stacking factor when the grain-oriented electrical steel sheet is processed into an iron core. The flattening annealing is preferably performed with an annealing temperature of 750 °C to 950 °C and an annealing time of about 10 seconds to 200 seconds.

In the present disclosure, the steel sheet surface is preferably applied with a tension coating (insulating coating) before or after the flattening annealing. The tension coating is such a coating that imparts tension to the steel sheet for iron loss reduction. Examples of the tension coating include inorganic coating containing silica and ceramic coating, which can be applied with conventional methods such as physical deposition, chemical deposition, and the like.

The grain-oriented electrical steel sheet of the present disclosure can be suitably obtained by the processes described above, and all of the processes and manufacturing conditions not described above may be according to conventional methods.

### EXAMPLES

A steel slab (slab for grain-oriented electrical steel sheet) was manufactured by continuous casting, where the steel slab had a chemical composition containing C: 0.07 mass%, Si: 3.4 mass%, Mn: 0.1 mass%, Ni: 0.2 mass%, Al: 240 mass ppm, S: 20 mass ppm, N: 90 mass ppm, and Se: 180 mass ppm, with the balance being inevitable impurities. The slab was heated to 1430 °C and then subjected to hot rolling to obtain a hot-rolled sheet with a thickness of 2.2 mm. The hot-rolled sheet was subjected to hot-rolled sheet annealing at 1100 °C for 20 seconds. Next, the hot-rolled sheet after hot-rolled sheet annealing was subjected to cold rolling to obtain an intermediate thickness of 0.40 mm, and then to intermediate annealing under the conditions of oxidation degree P(H₂O)/P(H₂) = 0.40, temperature: 1000 °C, and time: 70 seconds. Next, after removing subscale from the surface of the hot-rolled sheet after intermediate annealing by pickling with hydrochloric acid, the steel sheet was cold rolled again to obtain a steel sheet with a final thickness of 0.23 mm.

Grooves were formed on one side of the steel sheet under the conditions listed in Table 3.

The groove formation patterns listed in Table 3 are as follows. The groove width was adjusted to 150 µm in all cases.
I After final annealing, grooves with a depth of 10 µm were formed by a gear-shaped roller at intervals of 5 mm.
II After final annealing, grooves with a depth of 15 µm were formed by high-output laser irradiation.
III After applying resist ink in a pattern with non-applied areas at intervals of 3 mm using a groove roller, grooves with a depth of 20 µm were formed in the non-applied areas by electrolytic etching.
IV After applying resist ink in a pattern with non-applied areas at intervals of 3 mm using an inkjet printer (200 dpi), grooves with a depth of 20 µm were formed in the non-applied areas by electrolytic etching.
V After applying resist ink to one side of the steel sheet, a laser was repeatedly scanned in a linear fashion in a direction orthogonal to the rolling direction and at intervals of 3 mm in the rolling direction so that the resist ink was peeled off and removed at intervals of 3 mm in the rolling direction. The laser irradiation was performed with a galvano scanner method by a single mode fiber laser to peel off the resist ink continuously and completely from one end to the other end in the width direction of the steel sheet. Next, electrolytic etching was performed to form grooves with a depth of 25 µm.

In the above groove formation patterns, when resist ink was applied, the resist ink remaining on the steel sheet was removed after electrolytic etching.

Next, the steel sheet was subjected to decarburization where it was retained at an oxidation degree P(H₂O)/P(H₂) of 0.44 and a soaking temperature of 820 °C for 300 seconds. Next, an annealing separator composed mainly of MgO was applied to the surface of the steel sheet, and final annealing was performed for the purposes of secondary recrystallization, formation of a forsterite film and purification under the conditions of 1160 °C and 10 hours. Then, tension coating was performed in which an insulating coating made of 60 mass% colloidal silica and aluminum phosphate was applied and then baked at 850 °C to obtain a test piece. This tension coating application process also serves as flattening annealing.

The thickness of the forsterite film formed on the floor of the grooves of the test piece thus obtained was investigated, and the average value and standard deviation of the forsterite film thickness were calculated in the same manner as in Experiment 1 described above.

The test piece was sheared to a size of 30 mm × 280 mm and then subjected to stress relief annealing under conditions of an argon atmosphere, 800 °C and 3 hours (to eliminate the effects of shearing), and then the sample was subjected to magnetic property measurement with the Epstein test method. To further investigate the effect of stress relief annealing in a carburizing atmosphere, stress relief annealing was again performed at 820 °C for 2 hours in ammonia decomposition gas (mixed gas) with NH₃: 12 vol% to 15 vol% and N₂: H₂ = 1: 3 as residual gas. The sample after stress relief annealing was subjected to magnetic property measurement with the Epstein test method. The results of Epstein tests before and after the stress relief annealing using the nitriding atmosphere mixed gases were compared to determine the increase or decrease in W_{17/50}. Further, the amount of nitrogen was chemically analyzed before and after the stress relief annealing, and the results of the chemical analysis before and after the annealing were compared to determine the increase or decrease in nitrogen.

Table 3 listed the average value and standard deviation of the thickness of the forsterite film formed on the floor of the grooves, as well as the increase or decrease in W_{17/50} and the increase or decrease in nitrogen (nitriding quantity) before and after the stress relief annealing in the nitriding atmosphere mixed gas. In Table 3, irradiation energy and steel sheet temperature are indicated as "-" for test Nos. 1 to 4, where laser scanning for the purpose of removing resist ink was not performed.

As listed in Table 3, when a forsterite film satisfying the predetermined average thickness and standard deviation was formed on the floor of the grooves under the conditions of the present disclosure, nitriding during stress relief annealing could be effectively suppressed, and a grain-oriented electrical steel sheet with excellent magnetic properties could be obtained.

**Table 3**

| Example Test No. | Groove formation pattern | Irradiation energy (J/m) | Steel sheet temperature (°C) | Forsterite film thickness on the floor of grooves | | Before and after stress relief annealing in nitriding atmosphere gas | | Remarks |
|---|---|---|---|---|---|---|---|---|
| | | | | Average (µm) | Standard deviation (µm) | Increase or decrease in W_{17/50} (W/kg) | Increase or decrease in carbon (ppm) | |
| 1 | I | - | - | No forsterite film formed | | 0.42 | 235 | Comparative Example |
| 2 | II | - | - | No forsterite film formed | | 0.45 | 226 | Comparative Example |
| 3 | III | - | - | 0.66 | 0.48 | 0.18 | 83 | Comparative Example |
| 4 | IV | - | - | 0.67 | 0.37 | 0.15 | 65 | Comparative Example |
| 5 | V | 15 | 60 | 0.72 | 0.04 | 0.02 | 13 | Example |
| 6 | V | 20 | 60 | 0.73 | 0.03 | 0.01 | 15 | Example |
| 7 | V | 25 | 60 | 0.72 | 0.02 | 0.01 | 12 | Example |
| 8 | V | 27 | 60 | 0.71 | 0.13 | 0.02 | 18 | Example |
| 9 | V | 29 | 60 | 0.55 | 0.23 | 0.02 | 19 | Example |
| 10 | V | 32 | 60 | 0.48 | 0.38 | 0.15 | 64 | Comparative Example |
| 11 | V | 35 | 60 | 0.55 | 0.43 | 0.16 | 69 | Comparative Example |
| 12 | V | 40 | 60 | 0.47 | 0.35 | 0.19 | 62 | Comparative Example |
| 13 | V | 45 | 60 | 0.43 | 0.31 | 0.25 | 82 | Comparative Example |
| 14 | V | 50 | 60 | 0.27 | 0.18 | 0.27 | 153 | Comparative Example |
| 15 | V | 20 | 15 | 0.63 | 0.40 | 0.16 | 72 | Comparative Example |
| 16 | V | 20 | 20 | 0.61 | 0.37 | 0.15 | 67 | Comparative Example |
| 17 | V | 20 | 25 | 0.68 | 0.39 | 0.13 | 57 | Comparative Example |
| 18 | V | 20 | 30 | 0.72 | 0.40 | 0.12 | 54 | Comparative Example |
| 19 | V | 20 | 35 | 0.69 | 0.37 | 0.11 | 42 | Comparative Example |
| 20 | V | 20 | 40 | 0.75 | 0.19 | 0.03 | 13 | Example |
| 21 | V | 20 | 50 | 0.72 | 0.06 | 0.02 | 9 | Example |
| 22 | V | 20 | 80 | 0.74 | 0.05 | 0.01 | 7 | Example |
| 23 | V | 20 | 100 | 0.69 | 0.08 | 0.01 | 8 | Example |
| 24 | V | 20 | 150 | 0.68 | 0.06 | 0.01 | 7 | Example |
| 25 | V | 20 | 180 | 0.62 | 0.03 | 0.02 | 11 | Example |
| 26 | V | 20 | 195 | 0.63 | 0.09 | 0.03 | 17 | Example |
| 27 | V | 20 | 220 | 0.64 | 0.37 | 0.13 | 55 | Comparative Example |
| 28 | V | 20 | 250 | 0.61 | 0.45 | 0.18 | 82 | Comparative Example |

## Claims

1. A grain-oriented electrical steel sheet comprising a plurality of grooves on one side of the steel sheet that extend linearly across a rolling direction and are lined up at intervals in the rolling direction, and having at least a forsterite film on a surface of the steel sheet, wherein
an average thickness of the forsterite film formed on floor of the grooves is 0.45 µm or more, and a standard deviation σ of the thickness is 0.34 µm or less.

2. A method of manufacturing a grain-oriented electrical steel sheet, comprising a series of processes of subjecting a slab for grain-oriented electrical steel sheet to hot rolling to obtain a hot-rolled sheet, then subjecting the hot-rolled sheet to cold rolling once or two or more times with intermediate annealing performed therebetween to obtain a steel sheet with a final thickness, then subjecting the steel sheet to decarburization annealing, then subjecting the steel sheet to final annealing after applying an annealing separator to a surface of the steel sheet, and then subjecting the steel sheet to final annealing, wherein
after the cold rolling and before the applying of an annealing separator, resist ink is applied to one side of the steel sheet, a laser is repeatedly scanned in a linear fashion across a rolling direction of the steel sheet on the applied surface at intervals in the rolling direction, the resist ink is removed from areas irradiated by the laser, and then electrolytic etching is applied on the removed areas to form a plurality of grooves that extend linearly across the rolling direction of the steel sheet and are lined up at intervals in the rolling direction, and
the scanning of the laser is performed with an irradiation energy of the laser being less than 30 J/m and a temperature of the steel sheet being 40 °C or higher and lower than 200 °C.
